# EUROPEAN PATENT APPLICATION

(11) **EP 2 806 393 A2**
(43) Date of publication of application: **26.11.2014**
(21) Application number: 14169095.8
(22) Date of filing: 20.05.2014
(51) Int. Cl.: G06Q 50/06

(54) **Electricity rate managing system**

(30) Priority: 20.05.2013 JP 2013106355
(71) Applicant: Kabushiki Kaisha Toshiba, Tokyo 105-8001 (JP)
(72) Inventor: Ienaga, Eiji, Tokyo, 105-8001 (JP); Iijima, Hidero, Tokyo, 105-8001 (JP); Inaba, Michihiko, Tokyo, 105-8001 (JP); Morita, Yasuhiro, Tokyo, 105-8001 (JP)
(74) Representative: Hoffmann Eitle

(57) **Abstract**

An electricity rate managing system includes a memory that stores a general electricity distributing fee unit price, and a renewable energy buying fee unit price, and a fee unit price calculator that calculates various fee unit prices. The fee unit price calculator adjusts a supplied electricity fee unit price so as to exceed the general electricity distributing fee unit price, and adjusts a renewable energy power generation fee unit price so as to exceed the renewable energy buying fee unit price.

## Description

### CROSS-REFERENCE TO RELATED APPLICATIONS

This application is based upon and claims the benefit of priority from Japan Patent Application No. 2013-106355, filed on May 20, 2013, the entire contents of both of which are incorporated herein by reference.

### BACKGROUND

### FIELD

The present disclosure relates to an electricity rate managing system that assists a supply of electricity purchased from renewable energy power generating facilities to localities.

### DESCRIPTION OF THE RELATED ART

Global warming and a depletion of fossil fuels are becoming serious, and the global environment and energy are keenly getting attention. Under such a circumstance, solar light and wind power are getting attention as energy source with little environmental loads, and thus a solar power generation utilizing solar light and a wind power generation utilizing wind power are getting attention.

Such renewable energy need high costs in the present circumstance, and such costs are often shifted to consumers, which is a large burden for the consumers. In order to reduce the electricity rate for the consumers, there are two options : inexpensive power supply; and energy saving. In order to prepare inexpensive electricity, two schemes are known. One is to place a non-utility power generator and a renewable energy device at each consumer's end, and to supply surplus power to electricity companies together with a self-consumption, thereby obtaining an electricity selling fee. The other is to purchase inexpensive electricity as needed based on, mainly, a contract between electricity companies and consumers.

A system technology is proposed to decrease the electricity rate through both schemes. For example, electricity is purchased through a scheme of receiving electricity in a lump, and of selling the purchased electricity to the consumers again. According to this scheme, it becomes unnecessary for the consumers to increase a contracted electricity beyond the needs, and a company which receives electricity in a lump can collect the consumers, enabling such a company to advantageously make a contract with electricity companies. When renewable energy is added to this scheme, it becomes possible for the electricity companies to also purchase a self-consumption and a surplus power. An electricity rate managing system technology to manage such a scheme is already in practical use.

However, in order to reach a stage of self-consumption, it is necessary to finely adjust the electricity rate schedule delivered from the electricity companies and the amount of consumption at the consumer's end, and a demand prediction and a power generation prediction are difficult. Hence, there is a demand for a technology that enables such fine adjustment.

Conversely, it is also difficult for a company which collects the consumers and receives electricity in a lump to analyze a demand level of a consumer and an activity with a goal that is energy saving. Hence, a function is developed which remotely controls and blocks a demanding device with an instruction that prompts energy saving at the consumer's end when a demand becomes tight. This is a service provided while checking the energy saving goal of each consumer and a past demand behavior, but a demand prediction sometimes becomes inaccurate. Accordingly, there is a technical problem in a decision making like based on what information such a decision should be made, and there are only a few appropriate assist systems so far which are sufficient in practical use.

So far, the following representative technologies have been proposed at a supply adjusting side and a consumer's side.

Japan Patent No. 5129934 discloses a technology which relates to a solar power selling/buying system at a rented multifamily building. The intended purpose is to allow the owner of the rented building to make a contract with an electricity company for a power reception in a lump, thereby suppressing an excessive consumption of electricity based on a reference value to which a heat loss coefficient Q value is applied. When, in particular, there are multiple rent contractors, each contractor is provided with a simple electricity meter to observe the trend, and energy consumption is visualized such that the amount of consumed electricity and the amount of electricity not utilized yet are presented in the form of points based on the Q value indicating the heat insulating effect, thereby attempting to increase the amount of sold electricity generated by solar power generation.

This technology is, however, limited to a high heat-insulating house that enables a calculation of the Q value, and is to accomplish energy saving through the independent effort by the consumer living in the house due to the visualization. In addition, this technology does not have a fixed-rate buy-out system, and a calculation function of a substantially public-supported fee assistance in consideration of a distribution of a bonus fee relative to the electricity rate upon a self-consumption. Accordingly, it is necessary for the electricity distributing company, the consumer, and the service providing company to exchange data with each other. That is, the contribution of the owner of a solar power generator is not taken into consideration in the calculation. The electricity rate induces further energy saving by the consumers when the foregoing assists are taken into consideration in the calculation and a large/small relationship with a fee changing as time advances or together with the transition of the system is calculated. Therefore, there is a need for a development of an algorithm that considers those factors.

Japan Patent No. 5130238 discloses a technology which assists an energy saving action with reference to an energy-saving target value. This is to compare the energy-saving target value with an actual energy-saving value, to display an energy saving procedure for multiple home electrical appliances, to plan an energy saving action based on this, and to obtain an energy usage for each year, thereby accomplishing the energy-saving target value. However, the contribution rate of renewable energy is not calculated in such an energy saving action, and the function simply calculates the saved energy with reference to only the energy usage.

An example method of prompting an introduction of renewable energy is a fixed-rate buy-out system (FIT: Feed In Tariff) that causes an electricity company to purchase renewable energy for a certain time period at a fixed rate, and such a system is adopted in Germany and in Japan. This method is advantageous for prompting an investment motivation to renewable energy by setting the buy-out price to be higher than a general electricity rate unit price and by setting a long time period for a buy-out at a fixed rate, but has the following disadvantages.

First, the buy-out price set to be high is shifted to the consumers from the electricity company. Accordingly, houses and corporate businesses not introducing renewable energy are forced to shear the burden, and thus such a burden is substantially becoming like a tax.

Next, when a large amount of such electricity flows into a system, the system frequency of the electricity distributing company and the voltage thereof are fluctuated, and thus it becomes necessary to newly install an adjustment electric device that adjusts such fluctuation. In order to address such disadvantages, a continuous cost-down of the renewable energy devices is necessary, and it is desired for each locality, each house, and each corporate business to self-consume electricity originating from the renewable energy regardless of the FIT.

The conventional technologies all convert the FIT into a fee, and thus those are not systems which are made in consideration of the energy saving, the energy efficiency, and a reduction of investments to an electricity distribution and an electricity generation performed by the electricity company. Hence, there is a demand for a system which compares multiple fee schedules including the FIT fee, and calculates the lowest price of the electricity rate for the consumers.

The present disclosure has been made in view of the aforementioned circumstances, and it is an objective of the present disclosure to provide an electricity rate managing system that calculates an electricity rate advantageous for a consumer based on a presumption in which a local electricity supply business operator buys out electricity from renewable energy power generating facilities and distributes the power to a locality.

### SUMMARY

An electricity rate managing system according to an embodiment of the present disclosure is owned by a local electricity supply business operator which is different from an electricity distributing company, and calculates an electricity rate to buy out electricity from a renewable energy power generating facility and to supply the electricity to a consumer. The electricity rate managing system includes: a memory that stores a unit price of an electricity distributing fee, and a unit price of a renewable energy buying fee; and an electricity rate unit price calculator that calculates various fee unit prices, in which: the electricity distributing fee unit price is a unit price of an electricity fee paid by the consumer to the electricity distributing company; the renewable energy buying fee unit price is a unit price of a fee when the renewable energy power generating facility sells electricity to the electricity distributing company; and the electricity rate unit price calculator: adjusts a supplied electricity fee unit price when the local electricity supply business operator supplies electricity to the consumer so as to exceed the electricity distributing fee unit price; and adjusts a renewable energy power generation fee unit price when the local electricity supply business operator purchases electricity from the renewable energy power generating facility so as to exceed the renewable energy buying fee unit price.

### BRIEF DESCRIPTION OF THE DRAWINGS

FIG. 1 is an exemplary diagram illustrating a surrounding environment of an electricity rate managing system according to a first embodiment;
FIG. 2 is a block diagram illustrating a configuration of the electricity rate managing system according to the first embodiment;
FIG. 3 is a flowchart illustrating a calculating operation of a fee unit price;
FIG. 4 is a flowchart illustrating a calculating operation of a fee to be paid to an investor owing renewable energy power generating facilities;
FIG. 5 is a flowchart illustrating a calculating operation of a fee to be charged to a consumer supplied with electricity from a local electricity supply business operator;
FIG. 6 is a block diagram illustrating a configuration of an electricity rate managing system according to a second embodiment; and
FIG. 7 is an exemplary diagram illustrating a surrounding environment of an electricity rate managing system according to a third embodiment.

### DETAILED DESCRIPTION OF THE PREFERRED EMBODIMENTS

### (First Embodiment)

### (Configuration)

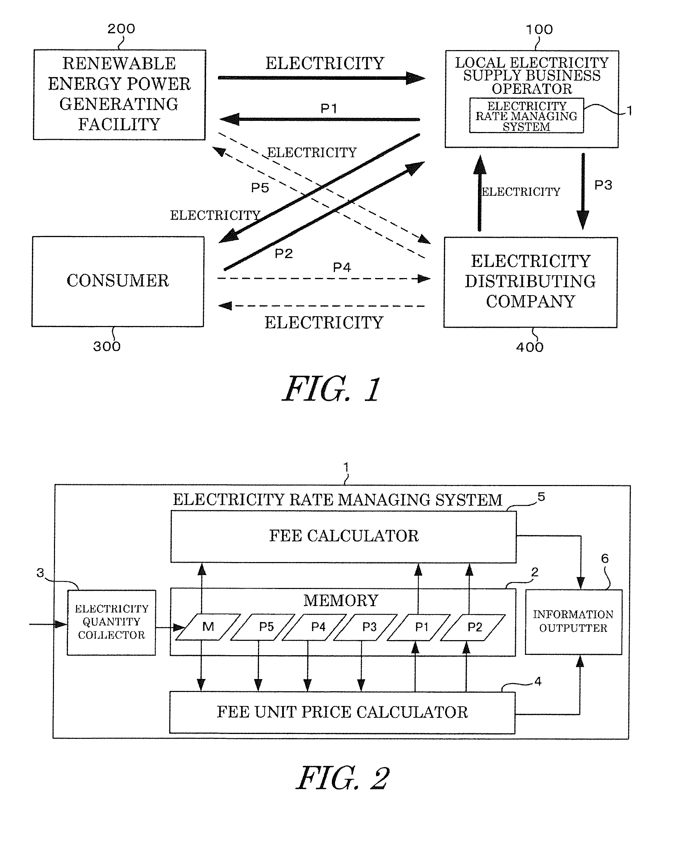

A detailed explanation will be below given of an electricity rate managing system 1 according to a first embodiment with reference to the accompanying drawings. As illustrated in FIG. 1, the electricity rate managing system 1 is owned by a local electricity supply business operator 100 that supplies electricity to a service locality. The local electricity supply business operator 100 has an energy managing system that controls electricity procuration and supply with respect to the service locality, buys out electricity from a renewable energy power generating facility 200, and supplies the power to a consumer 300 in the service locality. The renewable energy power generating facility 200 is a facility of solar power generation and wind power generation owned by an investor. In addition, the local electricity supply business operator 100 purchases electricity from an electricity distributing company 400 when the electricity supplied from the renewable energy power generating facility 200 is insufficient relative to a demand in the service locality, and supplies the power to the service locality.

This local electricity supply business operator 100 supplies, unlike the electricity distributing company 400 that distributes core electricity to a wide area, electricity to the service locality in a limited manner. The service locality is smaller than the service area of the electricity distributing company 400, and is a unit of an autonomous community, a complex facility, and a multifamily building, etc. The electricity distributing company 400 includes an electricity transmitting/distributing company owing power generating facilities.

The electricity rate managing system 1 is a stand-alone computer or multiple distributed computers connected together via a network. The electricity rate managing system 1 monitors the electricity procuration and supply by an energy managing system, and calculates a fee that transitions with reference to the local electricity supply business operator 100, i.e., a fee paid by the local electricity supply business operator 100 to the renewable energy power generating facility 200, a fee paid by the local electricity supply business operator 100 to the electricity distributing company 400, and a fee charged to the consumer 300. The electricity rate is a product of a fee unit price by a procured or supplied electricity quantity, but the electricity rate managing system 1 also adjusts this fee unit price.

As illustrated in FIG. 2, the electricity rate managing system 1 includes a memory 2 that stores each fee unit price and an electricity quantity. This memory 2 is an external memory device like a HDD, or is distributed to the distributed computers.

The memory 2 stores a unit price P1 of a renewable energy power generation fee. The unit price P1 of the renewable energy power generation fee is, as illustrated in FIG. 1, a fee unit price to be paid by the local electricity supply business operator 100 to the owner like an investor as a counter value for the power generation by the renewable energy power generating facility 200.

In addition, the memory 2 stores a unit price P2 of a supplied electricity fee. The unit price P2 of the supplied electricity fee is, as illustrated in FIG. 1, a unit price of a fee for supplying electricity to the consumer 300 from the local electricity supply business operator 100, has the unit price P1 of the renewable energy power generation fee shifted therein, and is added with a tax, a fixed expense of power lines, etc., and a margin of the local electricity supply business operator 100.

Still further, the memory 2 stores a unit price P3 of an electricity purchasing fee. The unit price P3 of the electricity purchasing fee is a unit price of a fee for the local electricity supply business operator 100 to purchase electricity from the electricity distributing company 400 when power from the renewable energy power generating facility 200 is insufficient relative to a demand.

Yet further, the memory 2 stores a unit price P4 of a general electricity distributing fee. The unit price P4 of the general electricity distributing fee is, as illustrated in FIG. 1, a unit price of an electricity rate to be paid by the consumer 300 to the electricity distributing company 400 as a counter value when electricity is supplied to the consumer 300 from the electricity distributing company 400 not through the local electricity supply business operator 100.

Moreover, the memory 2 stores a unit price P5 of a renewable energy buying fee. The unit price P5 of the renewable energy buying fee is, as illustrated in FIG. 1, a unit price of a buying fee of renewable energy paid by the electricity distributing company 400 to the owner of the renewable energy power generating facility 200 when electricity generated by the renewable energy power generating facility 200 is sold to the electricity distributing company 400. The unit price P5 of the renewable energy buying fee is set to be higher than the unit price of an electricity rate for electricity normally distributed, changes in accordance with an advancement level of an introduction quantity of renewable energy, and increases or decreases depending on a season.

In addition, the electricity rate managing system 1 includes an electricity quantity collector 3, a fee unit price calculator 4, a fee calculator 5, and an information outputter 6. The electricity quantity collector 3 includes a network adapter, communicates with a smart meter of the consumer 300 through a predetermined protocol like TCP/IP, or communicates with the energy managing system to obtain the electricity quantity consumed by the consumer 300 for each certain time cycle, and stores obtained data in the memory 2. When the consumed electricity quantity changes time by time, electricity quantities per a unit time that are mt1, mt2, ... and mtn are obtained, and are associated with time-zone information to identify a time zone. In addition, the electricity quantity collector 3 adds the consumed electricity quantity sequentially obtained to calculate a total consumed electricity quantity M, and stores the calculated quantity in the memory 2. That is, the electricity quantity collector 3 calculates total consumed electricity quantity M = mt1 + mt2 + ... + mtn.

The fee unit price calculator 4 calculates each kind of fee unit price, and stores the calculated unit price in the memory 2. A calculation policy is to provide a higher buy-out unit price advantageous in comparison with a case in which the renewable energy power generating facility 200 sells electricity to the electricity distributing company 400, and to provide an inexpensive electricity rate unit price than a case in which the consumer 300 pays to the electricity distributing company 400.

More specifically, the fee unit price calculator 4 adjusts various kinds of fee unit prices in such a way that a condition: the general electricity distributing fee unit price P4 > the supplied electricity fee unit price P2 > the renewable energy power generation fee P1 > the renewable energy buying fee P5. In addition, the fee unit price calculator 4 adjusts a difference between the supplied electricity fee unit price P2 and the electricity purchasing fee unit price P3 so as to be within 20 %, desirably, within 10 %.

That is, the fee unit price calculator 4 calculates the renewable energy power generation fee unit price P1 and the supplied electricity fee unit price P2 while updating the variable of each fee unit price until the following condition is satisfied.
First Condition: K = P3 × α + P1 × β - P2 × M, the renewable energy power generation fee unit price P1 that minimizes K is obtained. α is an electricity quantity received from the electricity distributing company 400 in the total consumed electricity quantity M, and β is an electricity quantity received from the renewable energy power generating facility 200 in the total consumed electricity quantity M.
Second Condition: M = α + β
Third Condition: 0.8 × P3 ≤ P2 ≤ 1.2 ×P3
Fourth Condition: P4 > P2 > P1 > P5

The fee unit prices P3, P4, and P5 are received from the electricity distributing company 400 through a network, or are entered using an input interface like a keyboard, and are stored in the memory 2. The renewable energy power generation fee unit price P1 and the supplied electricity fee unit price P2 are calculated by the fee unit price calculator 4 and are stored in the memory 2.

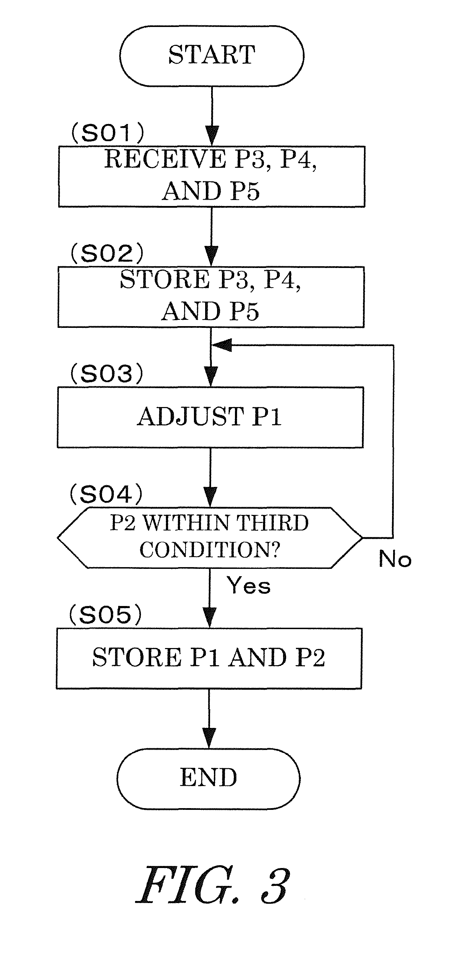

FIG. 3 is a flowchart illustrating an operation of the fee unit price calculator 4. First, the fee unit price calculator 4 receives (step S01) the electricity purchasing fee unit price P3, the general electricity distributing fee unit price P4, and the renewable energy buying fee unit price P5 from the computer of the electricity distributing company 400, and stores (step S02) those unit prices in the memory 2. When the electricity distributing company 400 is not capable of transmitting those fee unit prices and data over the network, man-machine interfaces, such as a keyboard and a mouse, may be plugged with the electricity rate managing system 1 to enter those.

Next, the fee unit price calculator 4 takes the electricity purchasing fee unit price P3, the general electricity distributing fee unit price P4, the renewable energy buying fee unit price P5, and the supplied electricity fee unit price P2 as variables, and adjusts (step S03) the renewable energy power generation fee unit price P1 in such a way that the difference between the supplied electricity fee unit price P2 and the renewable energy power generation fee unit price P1 so as to be the minimum within a unit time.

Next, the fee unit price calculator 4 determines (step S04) whether or not the electricity purchasing fee unit price P3 and the supplied electricity fee unit price P2 satisfy the condition that 0.8 × P3 ≤ P2 ≤ 1.2 × P3. Upon a determination, when the result is negative, the process returns to the step S03, and an adjustment of the supplied electricity fee unit price P2 is changed.

When the result upon a determination in the step S04 is positive, the fee unit price calculator 4 stores (step S05) the supplied electricity fee unit price P2 and the renewable energy power generation fee unit price P1 set through an adjustment in the memory 2.

The unit price P2 of the supplied electricity fee received by the local electricity supply business operator 100 from the consumer 300 and the electricity purchasing fee unit price P3 may produce an imposition or a tax determined by a nation, an autonomous community, an electricity company, an electricity transmitting/distributing company, an electricity mediation company, a company for an electricity trading, etc. Such imposition and tax are set as σ2, σ3, and when the value of the original supplied electricity fee unit price P2 is Initial P2 and the value of the original electricity purchasing fee unit price P3 is Initial P3, the supplied electricity fee unit price P2 becomes a value obtained by adding Initial P2 and σ2, i.e., P2 = Initial P2 + σ2, and the electricity purchasing fee unit price P3 becomes the value obtained by adding Initial P3 and σ3, i.e., P3 = Initial P3 + σ3.

The calculation of the fee unit price may be performed for each time slot. That is, with the total consumed electricity quantity M being as an electricity per a unit time, the fee unit price may be calculated so as to satisfy all of the first to fourth conditions. When those fee unit prices P1 to P5 vary largely depending on a time slot, etc., an average value may be calculated for each month or each week, and adjustment may be performed based on a comparison of those average values, or the calculation cycle may be changed so as to minimize the final electricity rate.

Still further, the renewable energy power generation fee unit price P1 has the quantity of generated electricity sequentially changing in accordance with an amount of solar radiation and a temperature. Accordingly, the calculation of the fee unit price may be performed by taking an average value for a certain time period, or the fee unit price may be calculated as a different value for each time, for each season, or for each natural condition like weather.

Through the above-explained operations, all of the renewable energy power generation fee unit price P1, the supplied electricity fee unit price P2, the electricity purchasing fee unit price P3, the general electricity distributing fee unit price P4, and the renewable energy buying fee unit price P5 are set, and are stored in the memory 2.

The fee calculator 5 calculates a fee to be paid to the investor, and the fee charged to the consumer 300 based on the renewable energy power generation fee unit price P1, the supplied electricity fee unit price P2 both stored in the memory 2, and the total consumed electricity quantity M calculated by the electricity quantity collector 3. The fee to be paid to the investor is P1 × M that is the renewable energy power generation fee unit price P1 multiplied by the total consumed electricity quantity M. The fee charged to the consumer 300 is P2 × M that is the supplied electricity fee unit price P2 multiplied by the total consumed electricity quantity M.

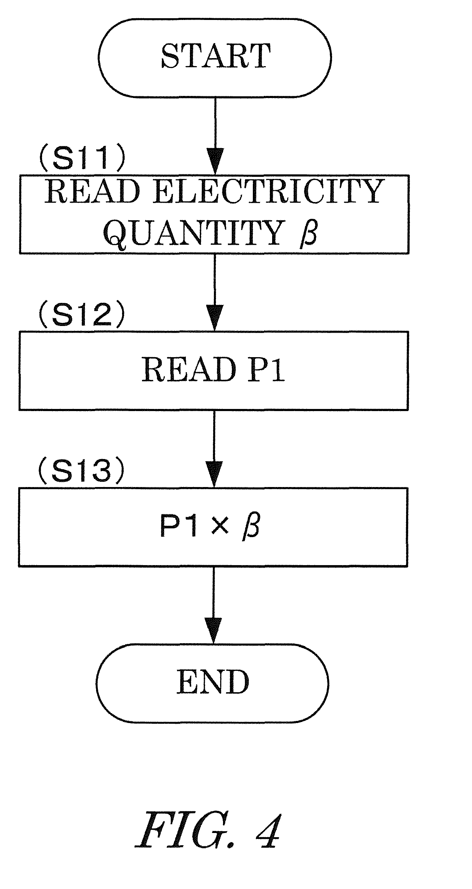

FIG. 4 is a flowchart illustrating a calculating operation of a fee to be paid to the investor by the fee calculator 5. First, the fee calculator 5 reads (step S11) an electricity quantity P originating from renewable energy and collected by the electricity quantity collector 3, reads (step S12) the renewable energy power generation fee unit price P1 from the memory 2, and multiplies (step S13) the renewable energy power generation fee unit price P1 by the electricity quantity β.

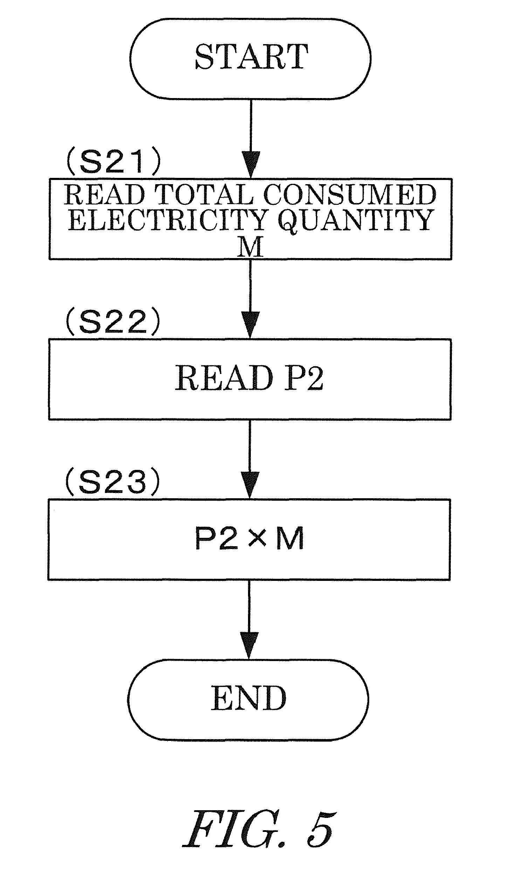

Next, FIG. 5 is a flowchart illustrating a calculating operation of a fee to be charged to the consumer 300 by the fee calculator 5. First, the fee calculator 5 reads (step S21) the total consumed electricity quantity M for each consumer 300 collected by the electricity quantity collector 3, reads (step S22) the supplied electricity fee unit price P2 from the memory 2, and multiplies (step S23) the supplied electricity fee unit price P2 by the total consumed electricity quantity M.

When the total consumed electricity quantity M can be covered by the supplied electricity fee unit price P2, a calculation can be carried out as a total electricity rate P2 × M, but when the supplied electricity fee unit price P2 does not cover the whole, a total electricity rate C can be calculated as C = M × (P2 × a + P3 × (1 - a)). a is a constant value, and a deal with respect to a is based on a contract with the electricity distributing company 400 or is variable depending on an energy saving quantity, etc., and a is a positive number equal to or smaller than 1. In addition, the electricity purchasing fee unit price P3 becomes the renewable energy buying fee unit price P5, or another value in consideration of the renewable energy buying fee unit price P5 may be calculated.

The information outputter 6 outputs the fee unit price adjustment result and the fee calculation result by the fee calculator 5 in a manner recognizable visually. This information outputter 6 is one of a man-machine interfaces of the user, and outputs the fee unit price adjustment result or the fee calculation result or both in accordance with an input operation given by the user. For example, the information outputter 6 includes a monitor, such as a CRT display, a liquid crystal display, or an organic EL, and a printer that prints the result on a paper medium.

### (Advantageous Effect)

As explained above, the electricity rate managing system 1 includes the memory 2 that stores the general electricity distributing fee unit price P4 , and the renewable energy buying fee unit price P5, and the fee unit price calculator 4 that calculates various fee unit prices. In addition, the fee unit price calculator 4 adjusts the supplied electricity fee unit price P2 so as to exceed the general electricity distributing fee unit price P4, and also adjusts the renewable energy power generation fee unit price P1 so as to exceed the renewable energy buying fee unit price P5.

Hence, the consumer 300 can receive electricity at the supplied electricity fee unit price P2 that is inexpensive in comparison with the general electricity distributing fee unit price P4 when purchasing electricity from the electricity distributing company 400. Accordingly, the consumer 300 is motivated to purchase electricity from the local electricity supply business operator 100.

In addition, the renewable energy power generating facility 200 is capable of selling renewable energy to the local electricity supply business operator 100 at the renewable energy power generation fee unit price P1 advantageous in comparison with the renewable energy buying fee unit price P5 when selling renewable energy to the electricity distributing company 400. Hence, it can be expected that investors place renewable energy power generating facilities 200.

As explained above, placement of the renewable energy power generating facilities 200 advances, and the utilization factor of renewable energy increases, and thus it is effective for suppression of global warming. In addition, the consumer 300 becomes more likely to be linked with the renewable energy power generating facility 200, the self-consumption of renewable energy by the consumer 300 advances, decreasing the necessity of the adjustment of the system frequency of the electricity distributing company 400 and the voltage thereof, etc. This contributes to a stable electricity supply, and a load for the electricity distributing company 400 for a stable electricity supply can be reduced.

Still further, this electricity rate managing system 1 further stores the electricity quantity purchased by the local electricity supply business operator 100 from the electricity distributing company 400, the electricity purchasing fee unit price P3, and the total consumed electricity quantity M of the consumer 300, adjusts the supplied electricity fee unit price P2, and adjusts the renewable energy power generation fee unit price P1 in such a way that the difference between the electricity rate received from the consumer 300 and the total fee to be paid to the electricity distributing company 400 and the renewable energy power generating facility 200 becomes the minimum.

Accordingly, a fee schedule advantageous for investors becomes presentable, placement of the renewable energy power generating facilities 200 further advances, and the utilization factor of renewable energy increases. Hence, it is effective for a suppression of global warming.

Yet further, the fee unit price calculator 4 adjusts the renewable energy power generation fee unit price P1 in such a way that the electricity rate unit price to be paid by the consumer 300 as a counter value that the local electricity supply business operator 100 supplies, to the consumer 300, electricity purchased from the electricity distributing company 400, and the electricity rate unit price to be paid by the consumer 300 as a counter value that the local electricity supply business operator 100 supplies, to the consumer 300, electricity purchased from the renewable energy power generating facility 200 are within a predetermined ratio.

Accordingly, a stable fee schedule can be presented to the consumer 300, and it becomes unnecessary for the consumer 300 to pay attention whether or not renewable energy is utilized. Hence, placement of the renewable energy power generating facilities 200 can be prompted regardless of the demand from the consumer 300.

### (Second Embodiment)

Depending on a nation or an autonomous community, when electricity of the consumer 300 obtained from renewable energy is not arranged to the electricity distributing company 400 but the consumer 300 self-consumes such electricity, the renewable energy buying fee unit price P5 is increased. More specifically, the amount of money to be paid by the local electricity supply business operator 100 to a nation, an autonomous community, an electricity company, an electricity transmitting/distributing company, an electricity mediation company, or a company for an electricity trading is decreased in accordance with an electricity usage, and such a decrease becomes an apparent increase in the renewable energy buying fee unit price P5, and the increased renewable energy buying fee unit price P5 becomes a self-consumption fee unit price P6.

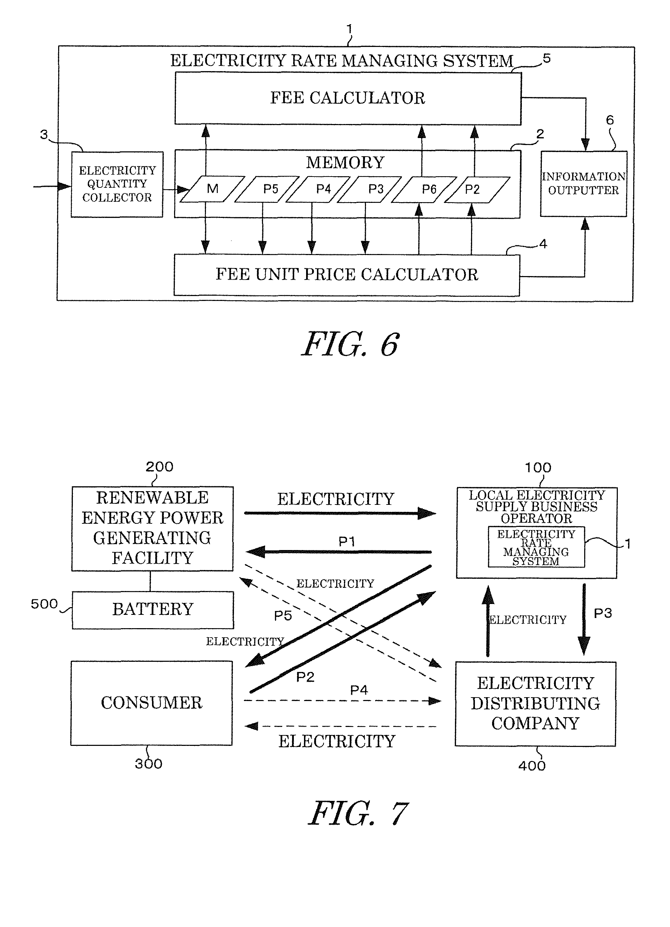

According to an electricity rate managing system 1 of a second embodiment, as illustrated in FIG. 6, the memory 2 further stores the self-consumption fee unit price P6 instead of the renewable energy power generation fee unit price P1. The fee unit price calculator 4 calculates each fee unit price so as to satisfy a condition: the general electricity distributing fee unit price P4 > the supplied electricity fee unit price P2 > the self-consumption fee unit price P6 > the renewable energy buying fee unit price P5. The renewable energy power generating fee unit price P1 and the supplied electricity fee unit price P2 calculated by the fee unit price calculator 4 are stored in the memory 2.

The self-consumption rate varies time by time. Accordingly, when the calculation becomes complex, multiple self-consumption rates b are set so as to be b = 0.7, 0.5, and 0.3 in multiple stages, and the closest value is selected, and, a total electricity rate C is calculated as C = M × (P2 × b + P3 × (1 - b)).

According to the above-explained electricity rate managing system 1, a bonus money obtained through the self-consumption can be returned to the consumer, and thus the self-consumption of renewable energy is further prompted. Hence, placement of the renewable energy power generating facilities 200 advances, and the utilization factor of renewable energy further increases. In addition, the presence of the consumer who positively consumes renewable energy results in the promotion of the placement of the renewable energy power generating facilities 200, constituting a preferable circulation to an increase in the utilization factor of renewable energy.

Still further, the self-consumption rate b with a large value is applied to a consumer who consumed a large quantity of renewable energy, and a benefit that is a reduction of electricity rate is given thereto, thereby increasing an apparent self-consumption rate as viewed from the whole consumers 300.

### (Third Embodiment)

Further, an explanation will be given of an electricity rate managing system 1 according to a third embodiment. As illustrated in FIG. 7, in this electricity rate managing system 1, the renewable energy power generating facility 200 is added with a battery 500. The battery 500 has a function of storing electricity generated from renewable energy, and the stored energy can be counted as one originating from renewable energy. That is, when, like a daytime, the generated electricity quantity from renewable energy is large, and there is surplus electricity, such electricity is stored in the battery 500. When, like an early evening and a night time, electricity from renewable energy is little, the stored electricity is released to the consumer 300. Accordingly, there is an advantage of "apparent electricity" that apparently increases the self-consumption of renewable energy quantity can be obtained.

According to the electricity rate managing system 1, electricity stored in the battery 500 and by what corresponds to renewable energy is taken as K, and a utilization of the maximum self-consumption that is L + K obtained by adding a generated electricity quantity L generated from renewable energy is calculated over the system. In addition, in order to give an incentive to the consumer 300, when electricity by what corresponds to the one stored in the battery is utilized, such a utilization is calculated as a part of the self-consumption rate. With respect to such a consumption quantity, the renewable energy power generation fee unit price P1 or the self-consumption fee unit price P6 may be applicable.

### (Other Embodiments)

Several embodiments of the present disclosure were explained in this specification, but those embodiments are merely presented as examples, and are not intended to limit the scope and spirit of the present disclosure. More specifically, a combination of all of or a part of the first and second embodiments is also within the scope and spirit of the present disclosure. The above-explained embodiments can be carried out in various other forms, and permit various omissions, replacements, and modifications without departing from the scope and spirit of the present disclosure. Such embodiments and modifications thereof are within the scope and spirit of the present disclosure, and also within an equivalent range to the subject matter as recited in appended claims.

For example, the respective fee unit prices may be stored in the form of a database, and such a database separates the renewable energy power generation fee unit price P1 that is variable from the other fee unit prices P2 to P6. This may facilitate a control on the renewable energy power generation fee unit price P1 situation by situation. In addition, as to values, such as the total consumed electricity quantity M, and an electricity quantity generated from the renewable energy power generating facility 200 that are variable, such values may be managed on a database separately from the fee unit prices P2 to P6 which are similar to a fixed value.

In addition, a past total consumed electricity quantity M may be obtained or a future total consumed electricity quantity M for a certain time period may be predicted and utilized, and for example, a demand may be predicted based on an actual accomplishment in last month, in the same month in last year, and under the same weather condition.

Still further, the electricity rate managing system 1 may charge an electricity rate to the consumer 300, and may perform successive operations up to a recovery of the fee. A difference between an amount of money spent to obtain electricity and an amount of payment may be calculated, and a calculation may be performed so as to distribute the difference to multiple investors. In such a calculation, a distribution quantity can be calculated through, not an equitable distribution, but an application of a weight coefficient in accordance with the importance level of the investor.

## Claims

1. An electricity rate managing system that is owned by a local electricity supply business operator which is different from an electricity distributing company, and that calculates an electricity rate to buy out electricity from a renewable energy power generating facility and to supply the electricity to a consumer, the electricity rate managing system comprising:
a memory that stores a unit price of an electricity distributing fee, and a unit price of a renewable energy buying fee; and
an electricity rate unit price calculator that calculates various fee unit prices, wherein:
the electricity distributing fee unit price is a unit price of an electricity fee having been paid by the consumer to the electricity distributing company;
the renewable energy buying fee unit price is a unit price of a fee when the renewable energy power generating facility sells electricity to the electricity distributing company; and
the electricity rate unit price calculator:
adjusts a supplied electricity fee unit price when the local electricity supply business operator supplies electricity to the consumer so as to exceed the electricity distributing fee unit price; and
adjusts a renewable energy power generation fee unit price when the local electricity supply business operator purchases electricity from the renewable energy power generating facility so as to exceed the renewable energy buying fee unit price.

2. The electricity rate managing system according to claim 1, wherein:
the memory further stores an electricity quantity purchased by the local electricity supply business operator from the electricity distributing company, and an electricity buying fee unit price that is a fee unit price of the purchased electricity quantity, and a total consumed electricity quantity by the consumer; and
the electricity rate unit price calculator determines the supplied electricity fee unit price through the adjustment, and adjusts the renewable energy power generation fee unit price in such a way that a difference between an electricity rate received from the consumer and a total fee to be paid to the renewable energy power generating facility and the electricity distributing company becomes the minimum.

3. The electricity rate managing system according to claim 1 or 2, wherein the electricity rate unit price calculator adjusts the renewable energy power generation fee unit price in such a way that an electricity rate unit price to be paid by the consumer as a counter value that the local electricity supply business operator supplies, to the consumer, electricity purchased from the electricity distributing company, and an electricity rate unit price to be paid by the consumer as a counter value that the local electricity supply business operator supplies, to the consumer, electricity purchased from the renewable energy power generating facility are within a predetermined ratio.

4. The electricity rate managing system according to any one of claims 1 to 3 , further comprising a power generation fee calculator that calculates an electricity rate to the renewable energy power generating facility based on the renewable energy power generation fee unit price and a generated electricity quantity.

5. The electricity rate managing system according to any one of claims 1 to 4, further comprising an electricity rate calculator that calculates an electricity rate to the consumer based on the supplied electricity fee unit price and a consumed electricity quantity.

6. The electricity rate managing system according to any one of claims 1 to 5, wherein, instead of the renewable energy power generation fee unit price, a self-consumption fee unit price obtained by adding the renewable energy buying fee unit price and a bonus money is adjusted so as to exceed the renewable energy buying fee unit price.

7. The electricity rate managing system according to any one of claims 1 to 6, further comprising an information outputter that outputs an adjustment result of each fee unit price.

8. An electricity rate managing method for calculating an electricity rate when a local electricity supply business operator that is different from an electricity distributing company buys out electricity from a renewable energy power generating facility and supplies the electricity to a consumer, the electricity rate managing method comprising:
adjusting a supplied electricity fee unit price when the local electricity supply business operator supplies electricity to a consumer so as to exceed an electricity distributing fee unit price that is an electricity fee unit price paid to the electricity distributing company by the consumer; and
adjusting a renewable energy power generating fee unit price when the local electricity supply business operator buys out renewable energy from the renewable energy power generating facility so as to exceed a renewable energy buying fee unit price that is a unit price of fee when the renewable energy power generating facility sells electricity to the electricity distributing company.
